(19) Europäisches Patentamt

European Patent Office

Office européen des brevets

(11) Veröffentlichungsnummer: **0 263 927 B1**

## (12) EUROPÄISCHE PATENTSCHRIFT

(45) Veröffentlichungstag der Patentschrift: **23.09.92**

(51) Int. Cl.⁵: **C08G 59/00**, C07D 303/02

(21) Anmeldenummer: **87110668.8**

(22) Anmeldetag: **23.07.87**

---

(54) Verfahren zur Herstellung von Glycidylverbindungen.

---

(30) Priorität: **17.10.86 DE 3635383**

(43) Veröffentlichungstag der Anmeldung:
**20.04.88 Patentblatt 88/16**

(45) Bekanntmachung des Hinweises auf die
Patenterteilung:
**23.09.92 Patentblatt 92/39**

(84) Benannte Vertragsstaaten:
**AT BE CH DE ES FR GB GR IT LI LU NL SE**

(56) Entgegenhaltungen:
**EP-A- 0 121 260**
**DE-A- 3 315 365**
**GB-A- 2 113 222**

(73) Patentinhaber: **RÜTGERSWERKE AKTIENGE-
SELLSCHAFT**
**Mainzer Landstrasse 217**
**W-6000 Frankfurt am Main 1(DE)**

(72) Erfinder: **Herzog, Rolf, Dr.**
**Beethovenstrasse 12 a**
**W-4250 Bottrop(DE)**
Erfinder: **Jellinek, Karl, Dr.**
**Mörikeweg 1**
**W-5860 Iserlohn(DE)**
Erfinder: **Meier, Bert, Dr.**
**Von Hardenberg Strasse 6**
**W-5750 Menden(DE)**
Erfinder: **Reinsch, Günter**
**Hügelstrasse 24**
**W-4220 Dinslaken(DE)**

EP 0 263 927 B1

## Beschreibung

Die Erfindung betrifft ein neues Verfahren zur Herstellung von Mono- und/oder Polyglycidylverbindungen. Ein Anwendungsgebiet derartiger Glycidylverbindungen ist die Herstellung elektronischer Bauteile. Hier werden aufgrund der zunehmenden Miniaturisierung der Bauteile immer größere Anforderungen an die Reinheit dieser Glycidylverbindungen gestellt. Insbesondere ist man bestrebt, Glycidylverbindungen mit einem möglichst niedrigen Gehalt an hydrolysierbaren Chlorverbindungen herzustellen, da diese Verbindungen bei Einwirkung von Feuchtigkeit oder thermischer Belastung Chloridionen abspalten und zu Korrosionsschäden führen.

Derartige unerwünschte Halogenverbindungen bilden sich aber bislang zwangsläufig, wenn gemäß dem Stand der Technik Glycidylverbindungen durch Umsetzung von Epihalogenhydrin, bevorzugt Epichlorhydrin mit nucleophil reagierenden Substanzen, wie z.B. Phenolen, aromatischen Aminen oder Carbonsäuren, synthetisiert werden.

Es hat andererseits nicht an Versuchen zur Herstellung von hochreinen Epoxidharzen mit niedrigen Chlorgehalten gefehlt.

In den Patenten US 4,485,221 sowie US 4,447,598 werden Verfahren beschrieben, um die unerwünschten chlorhaltigen Nebenprodukte von Epoxidharzen durch eine Nachbehandlung mit starken Laugen, z.B. Kalium-tert.-butylat in tert.-Butanol, oder durch Verwendung von Alkali in geeigneten Lösungsmittelmischungen, Methylethylketon und Toluol, abzubauen. Der Nachteil dieser Methoden ist. daß die hierbei angewendete intensive Alkalibehandlung zu unerwünschten Nebenreaktionen führt:
Anionische Polymerisation der Epoxidgruppe zu hochmolekularen, unlöslichen Nebenprodukten.

Additionsreaktionen von Epoxidgruppen an aliphatische OH-Gruppen.

Alkalische Hydrolyse der Epoxidgruppe zu - Glykolen.

Erhalten werden Epoxidharze in minderer Qualität (geringere Wärmeformbeständigkeit, höhere Hydrophilie und Viskosität). Die Verschlechterung der Ausbeute führt außerdem zu einer niedrigeren Wirtschaftlichkeit.

In der DAS 16 18 275 wird eine mit quaternären Ammoniumsalzen katalysierte Additionsreaktion von Epichlorhydrin an nucleophil reagierende Substanzen, z.B. Phenole, beschrieben. Die Dehydrohalogenierungsstufe wird unter Verwendung einer mit Ammoniumcarbonat gesättigten Alkalihydroxydlösung unter sehr milden Bedingungen durchgeführt.

Obwohl hierbei Harze mit einem Gehalt an hydrolysierbarem Chlor von nur 500 bis 1000 ppm erreicht werden, ist das Verfahren nicht praktikabel, denn aufgrund der niedrigen Reaktionstemperatur von 65 °C verläuft die Additionsreaktion zu langsam.

Bei den Verfahrensvarianten gemäß DE-A 34 02 247 und EP-A 0 121 260 erfolgt die Umsetzung unter Einsatz von Phasentransfer-Katalysatoren in heterogenen Reaktionsmischungen unter ebenfalls milden und damit selektiveren Reaktionsbedingungen. Als Phasentransfer-Katalysatoren werden z.B. quaternäre Ammoniumverbindungen, wie Benzyltriethylammoniumchlorid eingesetzt. Die Nacharbeitung derartiger Methoden ergab jedoch nicht, wie gewünscht, Epoxidharze mit äußerst niedrigen Gehalten an hydrolysierbarem Chlor.

In DE-A 33 30 042 und DE-A 33 15 365 wird die Herstellung von chlorarmen Epoxidharzen unter Verwendung von linearen oder cyclischen Ethern, wie z.B. Dioxan, als Hilfslösungsmittel und quaternären Ammoniumsalzen während der Umsetzungsreaktion von Epichlorhydrin mit nucleophil reagierenden Verbindungen, wie z.B. o-Kresol-Novolaken, beschrieben. Abgesehen davon, daß die Verwendung von Ethern in chemischen Prozessen wegen der Bildung von Peroxiden und der damit verbundenen Explosionsgefahr erhöhte Anforderungen an die Betriebssicherheit stellt, führt dieser Syntheseweg nur zu Epoxidharzen mit Gehalten an hydrolysierbarem Chlor in der Größenordnung von 100 -500 ppm, die jedoch den Anforderungen nicht mehr genügen.

Es war die Aufgabe der Erfindung, mit einem wirtschaftlichen Verfahren Glycidylverbindungen herzustellen, die einerseits nicht in ihrer Qualität beeinträchtigt sind und die andererseits einen Gehalt an hydrolysierbarem Chlor haben, der bei ihrem Einsatz in mikroelektronischen Bauteilen noch toleriert werden kann und der insbesondere unter 100 ppm liegt.

Die Lösung der Aufgabe erfolgt durch ein Verfahren gemäß der Ansprüche 1 bis 4.

Die bei der Synthese von Glycidylverbindungen gemäß dem Stand der Technik eingesetzten Epihalogenhydrine, insbesondere Epichlorhydrinqualitäten haben einen sehr hohen Reinheitsgrad von 99 - 99,5 %.

Die Analyse der in äußerst geringem Maße vorhandenen Epichlorhydrin-Verunreinigungen ergab unter anderem etwa 10 bis 25 niedermolekulare, chlorhaltige Kohlenwasserstoffe, die nach bisherigen Erkenntnissen in Epoxidharzsynthesen als völlig unreaktiv angesehen wurden.

Es wurde nun überraschenderweise gefunden, daß diese niedermolekularen chlorhaltigen Kohlenwasserstoffe für den Gehalt an hydrolysierbarem Chlor in den Glycidylverbindungen verantwortlich sind.

Es wurde weiterhin gefunden, daß man Mono- und/oder Polyglycidylverbindungen mit einem Gehalt an hydrolysierbarem Chlor von 10 bis 60 ppm (bestimmt analog DIN 53 188) erhält, wenn man in an sich bekannter Weise ein- oder mehrwertige Phenole, aromatische Amine oder Carbonsäuren mit Epihalogenhydrin-Qualitäten, insbesondere Epichlorhydrin-Qualitäten umsetzt, die im wesentlichen frei sind von den genannten niedermolekularen, Halogenkohlenwasserstoffen. Diese Epihalogenhydrin-Qualitäten haben Reinheiten von 99,7 bis 99,99 %, insbesondere von 99,8 bis 99,95 %.

Die so erhaltenen Polyglycidylverbindungen finden als Epoxidharze, die Monoglycidylverbindungen gegebenenfalls als reaktive Verdünner dieser Epoxidharze bevorzugt Verwendung bei der Herstellung elektrischer und elektronischer Bauteile. Sie bilden im vernetzten Zustanden Polymere mit ausgezeichneten mechanischen und elektrischen Eigenschaften und stellen einen dauerhaften Schutz für die mit ihnen isolierten und umhüllten Bauteile dar, auch bei extremen klimatischen Bedingungen.

Es ist ein weiterer Vorteil der Erfindung, daß die Umsetzung ohne zusätzliche Investitionen in herkömmlichen Anlagen durchgeführt werden kann. Dadurch ergibt sich eine hohe Wirtschaftlichkeit und Produktsicherheit.

## Patentansprüche

1. Verfahren zur Herstellung von Mono- und/oder Polyglycidylverbindungen durch Umsetzung von Epihalogenhydrin mit ein- oder mehrwertigen Phenolen, aromatischen Aminen oder Carbonsäuren, **dadurch gekennzeichnet,** daß zur Umsetzung ein Epihalogenhydrin verwendet wird, das einen Reinheitsgrad von 99,7 bis 99,99 % hat.

2. Verfahren nach Anspruch 1, **dadurch gekennzeichnet,** daß als Epihalogenhydrin Epichlorhydrin verwendet wird.

3. Verfahren nach den Ansprüchen 1 bis 2, **dadurch gekennzeichnet,** daß ein Epichlorhydrin mit einem Reinheitsgrad von 99,8 bis 99,95 % verwendet wird.

## Claims

1. A process for the preparation of mono- and/or polyglycidyl compounds by reacting epihalohydrin with uni- or multivalent phenols, aromatic amines or carboxylic acids, characterized in that an epihalohydrin having a degree of purity of from 99.7 to 99.99% is used for the reaction.

2. A process according to Claim 1, characterized in that epichlorydrin is used as the epihalohydrin.

3. A process according to Claims 1 to [*sic*] 2, characterized in that an epichlorhydrin with a degree of purity of from 99.8 to 99.95% is used.

## Revendications

1. Procédé de préparation de composés mono- et/ou polyglycidiques par réaction d'une épihalohydrins avec des mono- et des polyphénols, des amines aromatiques ou des acides carboxyliques, caractérise en ce que, pour la réaction, on utilise une épihalohydrine qui possède un degré de pureté de 99,7 à 99,99%.

2. Procédé selon la revendication 1, caractérisé en ce qu'on utilise de l'épichlorhydrine en tant qu'épihalohydrine.

3. Procédé selon les revendications 1 à 2, caractérisé an ce qu'on utilise une épichlorhydrine avec un degré de pureté de 99,8 à 99,95%.